# FASCICULE DE BREVET EUROPEEN

(11) **EP 1 250 645 B1**
(45) Date de publication et mention de la délivrance du brevet: **17.09.2003**
(21) Numéro de dépôt: 01903978.3
(22) Date de dépôt: 26.01.2001
(51) Int. Cl.: G06F 9/46

(54) **SYSTEME DE GESTION DE PERIPHERIQUES DANS UN CIRCUIT INTEGRE**
GERÄTETREIBERSYSTEM IN EINER INTEGRIERTEN SCHALTUNG
PERIPHERAL MANAGEMENT SYSTEM IN AN INTEGRATED CIRCUIT

(30) Priorité: 27.01.2000 FR 0001062
(43) Date de publication de la demande: 23.10.2002
(73) Titulaire: STMicroelectronics S.A., 92120 Montrouge (FR)
(72) Inventeur: CHABAUD, Myriam, F-13530 Trets (FR); ALBARET, Thierry, F-83470 Saint-Maximin (FR)
(74) Mandataire: Bentz, Jean-Paul
(86) Numéro de dépôt international: FR0100258
(87) Numéro de publication internationale: WO01055849

(56) Documents cités:
- US-A- 6 003 134
- TEO C Y ET AL: "MICROCOMPUTER-BASED MULTI-TASKING ON A SCADA SYSTEM USING INTERRUPTS IN MS-DOS" COMPUTERS IN INDUSTRY,NL,ELSEVIER SCIENCE PUBLISHERS. AMSTERDAM, vol. 22, no. 1, 1 juin 1993 (1993-06-01), pages 93-102, XP000381059 ISSN: 0166-3615

## Description

La présente invention concerne un système de gestion de périphériques dans un circuit intégré à microprocesseur. Elle concerne plus particulièrement les applications du type carte à puce.

Un circuit intégré pour une application de type carte à puce, appelé couramment microcircuit, ou encore micromodule électronique, comprend, en plus d'un microprocesseur, un certain nombre d'autres ressources matérielles, appelées généralement périphériques, tel que des compteurs, des circuits d'interface série, des générateurs de nombre aléatoires, de signaux d'horloge... On a habituellement, associées à ces périphériques, des mémoires dont une mémoire programme ROM, des mémoires reprogrammables pour contenir des données d'application (EEPROM) ou encore une mémoire de travail (RAM), et un contrôleur d'accès aux périphériques, qui gère notamment les bus d'adresse et de données.

Un tel circuit intégré est habituellement livré à un client, qui n'est pas nécessairement l'utilisateur final du circuit, pour lequel on a implémenté dans ce circuit intégré selon sa destination finale, au moins une application. La tendance actuelle serait à l'implémentation de plusieurs applications, dont une est activée par une application externe, à un moment donné.

Ces applications peuvent être de différents types. Elles peuvent par exemple consister en un système d'exploitation de carte à puce (*operating system*), une librairie cryptographique, qui pourra permettre des calculs ou vérification de signature, du chiffrement, ou encore un logiciel de test embarqué, cette liste d'applications n'étant pas exhaustive.

Ces applications sont implémentées dans le circuit intégré sous forme de processus logiciels dans une couche logicielle d'application. Ces processus sont exécutés par le microprocesseur du circuit intégré.

Pour réaliser certains traitements d'un processus logiciel donné, la couche logicielle d'application doit appeler des processus sur des périphériques, appelées processus matériels dans la suite (par opposition aux processus logiciels).

Habituellement, elle le fait directement, c'est à dire qu'elle gère directement les périphériques du circuit intégré. Le fabricant du circuit intégré fournit à cet effet toutes les informations nécessaires, dont les adresses des différents périphériques du circuit intégré, les adresses en mémoire programme ROM des tables des vecteurs d'interruption matérielle,.... Ces informations sont spécifiques du circuit intégré. Elles permettent à la couche logicielle d'application d'appeler directement un processus matériel sur un périphérique. Elles permettent aussi à la couche logicielle de gérer ces périphériques en mode interruption, ce qui lui permet de continuer à travailler tant que le périphérique n'a pas terminé d'exécuter un processus matériel demandé (par exemple, la programmation d'une page mémoire EEPROM). Dans ce cas, c'est la couche logicielle d'application qui gère directement les interruptions matérielles émises par les périphériques, ce qui implique qu'elle doit lire et écrire des registres et accéder à la table des vecteurs d'interruption matérielle, en mémoire programme ROM, pour identifier une source d'interruption et engager les actions nécessaires.

Or, on cherche à améliorer toujours et encore la sécurité des cartes à puce, pour empêcher toute utilisation de ces cartes à des fins frauduleuses.

Un objet de l'invention est de sécuriser le système de gestion des périphériques dans un circuit intégré de carte à puce.

Une solution à ce problème technique a été trouvée dans l'invention, dans l'utilisation d'une couche logicielle intermédiaire agissant comme une barrière de sécurité entre la couche logicielle d'application et les ressources matérielles du circuit intégré, c'est à dire le microprocesseur et les périphériques.

Selon l'invention, cette couche logicielle intermédiaire assure la gestion de tous les périphériques pour le compte de la couche logicielle d'application. Ainsi, lorsqu'un processus de la couche logicielle d'application appelle un processus matériel sur un périphérique, cet appel est géré par la couche logicielle intermédiaire. Pour cela, on utilise une instruction d'interruption logicielle, par laquelle on appelle une fonction de la couche logicielle intermédiaire.

Lorsque la couche logicielle intermédiaire a terminé le traitement lié à la fonction appelée, elle fait un retour à la couche logicielle d'application, par une instruction de retour d'interruption.

Par ce mécanisme, la couche logicielle d'application n'a plus à connaître les spécificités matérielles du produit, comme l'adresse de la table des vecteurs d'interruptions matérielles, l'adresse des périphériques....On crée ainsi une barrière de sécurité entre les ressources matérielles du circuit intégré et l'application.

Par ailleurs, le temps d'exécution d'un processus matériel particulier sur un périphérique peut-être assez long (par exemple, la programmation d'un ou plusieurs mots en mémoire EEPROM).

De préférence, pour améliorer les performances de la carte, on prévoit que la couche logicielle intermédiaire libère tout de suite la couche logicielle d'application qui a appelé un processus matériel. Dans ce cas, la couche logicielle intermédiaire elle-même gère les périphériques en mode interruption. Ceci permet à la couche logicielle d'application de continuer à travailler et à la couche logicielle intermédiaire de traiter d'autres appels de processus matériels, le cas échéant.

Dans ce cas, lorsqu'un périphérique a terminé l'exécution d'un processus matériel, il émet une interruption matérielle, qui stoppe l'exécution en cours dans le microprocesseur et le renvoie à la gestion des interruptions matérielles dans la couche logicielle intermédiaire.

Selon l'invention, on prévoit alors que le traitement de l'interruption matérielle dans la couche logicielle intermédiaire comprend l'interruption de la couche logicielle d'application pour permettre à cette dernière de terminer le processus correspondant. Ainsi, selon l'invention, l'on a un partage du traitement de l'interruption matérielle, la couche logicielle intermédiaire assurant sa fonction de barrière de sécurité en effectuant le traitement de l'interruption correspondant à l'aspect matériel proprement dit, notamment la lecture et l'écriture de registres pour identifier la source de l'interruption matérielle, tandis que la couche logicielle d'application assure le reste du traitement de l'interruption, lié à l'application.

Ainsi, l'invention concerne un système de gestion de périphériques dans un circuit intégré à microprocesseur, comprenant une couche logicielle d'application comprenant au moins un processus nécessitant l'exécution de processus matériels sur au moins un périphérique du circuit intégré, caractérisé en ce qu'il comprend une couche logicielle intermédiaire pour gérer les processus matériels appelés par un processus de la couche logicielle d'application.

D'autres caractéristiques et avantages de l'invention sont indiqués dans la description suivante faite à titre indicatif et non limitatif de l'invention, et en référence aux dessins annexés dans lesquels :
la figure 1 représente schématiquement le système de gestion des périphériques selon l'invention ;
la figure 2 illustre un exemple de traitement d'un appel de fonction de la couche logicielle d'application par la couche logicielle intermédiaire; et
la figure 3 illustre un exemple de mise en oeuvre de l'invention utilisant des macro-instructions pour assurer les appels entre la couche logicielle d'application et la couche logicielle intermédiaire.

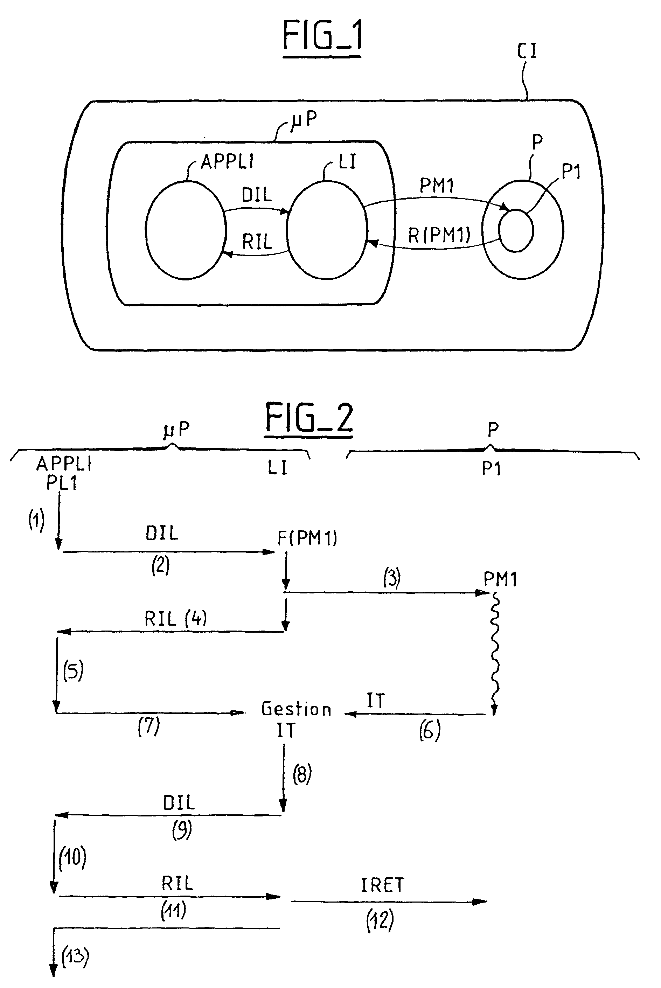

Le système de gestion de périphériques selon l'invention s'applique de manière générale à un circuit intégré CI comprenant un microprocesseur µP et des périphériques P. Il s'applique plus particulièrement à des circuits intégrés pour des applications de type carte à puce. Les périphériques de tels circuits intégrés comprennent habituellement au moins une mémoire programme ROM contenant les processus logiciels de la couche d'application APPLI et le programme correspondant à la couche logicielle intermédiaire LI selon l'invention. Les processus ou programmes des couches d'application APPLI et intermédiaire LI sont exécutés par le microprocesseur. C'est pourquoi on a choisi de les représenter sur la figure 1, à l'intérieur d'une boîte logique représentant le microprocesseur µP. A un moment donné, le microprocesseur exécute un processus ou programme donné de la couche application APPLI. Il peut être en pratique interrompu dans cette exécution par une interruption matérielle ou logicielle.

Dans l'invention, lorsque le traitement de la couche d'application APPLI effectué par le microprocesseur µP nécessite l'exécution d'un processus matériel dans un périphérique, il utilise l'interruption logicielle DIL pour appeler une fonction correspondante de la couche LI. Cette instruction de départ en interruption logicielle DIL est exécutée par le microprocesseur µp. Le traitement de cette interruption logicielle comprend le lancement du processus matériel correspondant PM1 sur le périphérique concerné P1. Le résultat de ce processus matériel R(PM1), qui peut tout simplement être un indicateur pour signifier que le processus est effectué, est retourné à la couche d'application avec l'instruction de retour d'interruption logicielle, RIL.

Plus précisément, et comme représenté sur la figure 2, le microprocesseur exécute (1) un processus PL1 de la couche logicielle d'application. Dans ce processus Pl1, il a besoin d'exécuter un processus matériel PM1. Il émet donc une interruption logicielle DIL (2) pour appeler une fonction correspondante F(PM1) de la couche logicielle intermédiaire. Cette interruption logicielle est traitée par la couche logicielle intermédiaire LI, qui appelle (3) le processus matériel PM1 correspondant sur le périphérique P1 concerné, en mode interruption. La couche logicielle intermédiaire LI rend alors la main (4) à la couche logicielle d'application qui peut continuer (5) d'autres traitements. Notamment, elle peut appeler d'autres fonctions différentes de la couche logicielle intermédiaire, pour lancer d'autres processus matériels.

Lorsque le processus matériel PM1 est terminé, le périphérique P1 concerné émet (6) une interruption matérielle IT, ce qui stoppe (7) le traitement en cours dans le microprocesseur µP, dans l'exemple un traitement de la couche logicielle d'application (ce pourrait être un traitement d'une autre fonction LI), pour le renvoyer vers la gestion de l'interruption (8), par la couche logicielle intermédiaire LI. Cette gestion comprend la lecture et l'écriture de la table des vecteurs d'interruption matérielle, permettant d'identifier la source de l'interruption matérielle, P1 dans l'exemple, puis le renvoi (9) de cette interruption vers la couche logicielle d'application APPLI, pour permettre le traitement (10) de l'interruption par le processus logiciel appelant. Ce renvoi se fait par une interruption logicielle DIL émise cette fois par la couche logicielle intermédiaire LI. Lorsque le processus concerné PL1 de la couche logicielle d'application a terminé son traitement de l'interruption, il libère (11) la couche logicielle intermédiaire LI, qui a son tour, libère (12) le périphérique P1

Le microprocesseur peut alors reprendre (13) le traitement en cours, là où il avait été arrêté.

Les considérations liées au mode interruption ne vont pas être rappelées en détail. Il s'agit d'un mode de communication avec des périphériques habituel, bien connu de l'homme du métier. On pourra simplement noter que dans le système de gestion selon l'invention qui utilise l'instruction assembleur de départ en interruption logicielle DIL, on associe en pratique un domaine à chacun des processus PL1 de la couche logicielle d'application et un domaine à la couche logicielle intermédiaire LI, en sorte que l'on a un vecteur d'interruption logicielle associé à chacun de ces domaines. Ainsi, lorsqu'une interruption logicielle DIL est émise, la table des vecteurs d'interruption permet d'identifier l'émetteur et de lancer le traitement d'interruption correspondant. Cette table se trouve dans la couche logicielle intermédiaire.

Par ailleurs, si un périphérique sur laquelle la couche logicielle intermédiaire LI doit lancer un processus matériel est occupé, l'étape (4) de la figure 2 dans laquelle ..a couche logicielle intermédiaire LI libère la couche logicielle d'application comprend le renvoi d'une information correspondante, lui signifiant que le périphérique est indisponible. On peut aussi prévoir que pour chaque domaine, on définit les fonctions de la couche logicielle intermédiaire LI qui peuvent être appelées. Dans ce cas, si la fonction de la couche logicielle intermédiaire LI appelée par un processus donné ne fait pas partie de la définition du domaine associé à ce processus, on prévoit que la couche logicielle intermédiaire LI renvoie avec l'instruction de retour d'interruption RIL une information indiquant que la fonction n'est pas accessible.

Si au contraire, le périphérique est disponible, il libère la couche logicielle d'application en lui renvoyant une information correspondante, lui indiquant que sa demande est en cours de traitement dans le périphérique concerné.

Dans l'invention, on utilise donc les possibilités offertes par le mode d'interruption logicielle du microprocesseur µP pour créer une barrière de sécurité entre la couche logicielle d'application et les périphériques. En particulier, la couche logicielle d'application n'a plus besoin de connaître les adresses des périphériques, de la tables des vecteurs d'interruption matérielle et autres informations qui sont des informations particulièrement importantes sur le plan sécuritaire. Elle doit seulement mettre en oeuvre le mode d'interruption logicielle, mode par lequel elle transmet ses appels de fonctions sur la couche logicielle intermédiaire qui gère les périphériques à sa place.

En pratique, dans le cas des circuits intégrés pour des applications de type carte à puce, les compilateurs de programme en code source (assembleur) n'intègrent généralement pas l'instruction assembleur de départ en interruption logicielle DIL et l'instruction assembleur de retour d'interruption RIL associée.

De préférence, pour éviter aux développeurs des processus de la couche d'application et aux développeurs de la couche logicielle intermédiaire LI d'avoir à programmer en assembleur, on prévoit selon l'invention que la couche logicielle intermédiaire LI contient des macro-instructions pour chaque appel de fonction.

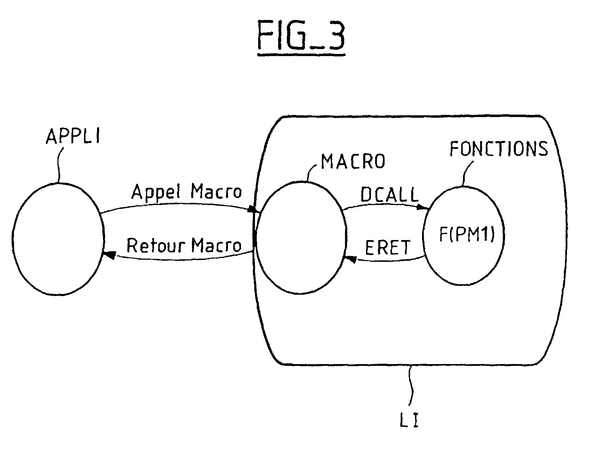

La couche logicielle d'application doit donc seulement appeler une macro-instruction de la couche logicielle intermédiaire LI. Cette macro-instruction comprend le transfert des paramètres liés à la fonction LI à exécuter et l'exécution de l'instruction assembleur DIL. Par ce mécanisme, c'est la couche logicielle intermédiaire LI qui émet l'interruption logicielle DIL. Le traitement de cette interruption DIL par la couche logicielle intermédiaire LI renvoie à son tour vers une fonction LI. De cette façon, seule la partie de la couche logicielle intermédiaire LI qui contient les macro-instructions doit être développée en langage assembleur. La couche logicielle d'application et les fonctions de la couche logicielle intermédiaire LI sont elles développées en langage évolué, typiquement en langage C. Un synoptique correspondant est représenté sur la figure 3.

L'invention qui vient d'être décrite permet de créer une barrière de sécurité entre la couche d'application et les périphériques du circuit intégré.

En outre, par le partage du traitement des interruptions matérielles entre les couches logicielles intermédiaire et d'application, on optimise la communication entre ces deux couches, en permettant à l'application concernée d'effectuer elle-même le traitement de l'interruption matérielle lié à l'application, tout en laissant la couche logicielle intermédiaire LI assurer son rôle de barrière, en lui laissant tous les aspects du traitement liés au matériel, notamment, l'identification de la source de l'interruption

## Revendications

1. Système de gestion de périphériques dans un circuit intégré à microprocesseur (µP), comprenant une couche logicielle d'application (APPLI) comprenant au moins un processus (Pl1) nécessitant l'exécution de processus matériels sur au moins un périphérique (P1) du circuit intégré, **caractérisé en ce qu'**il comprend une couche logicielle intermédiaire (LI) pour gérer les processus matériels appelés par un processus de la couche logicielle d'application.

2. Système de gestion de périphériques selon la revendication 1, **caractérisé en ce que** la couche logicielle d'application (APPLI) appelle une fonction (F(PM1)) de la couche logicielle intermédiaire (LI) correspondant au processus matériel (PM1) à exécuter.

3. Système de gestion de périphériques selon la revendication 2, **caractérisé en ce que** cet appel de fonction (F(PM1)) est effectué par l'émission par la couche logicielle d'application (APPLI) d'une interruption logicielle (DIL).

4. Système de gestion de périphériques selon la revendication 2, **caractérisé en ce que** cet appel de fonction (F(PM1)) est effectué par l'appel par la couche logicielle d'application (APPLI) d'une macro-instruction de la couche logicielle intermédiaire (LI), ladite macro-instruction comprenant l'émission par la couche logicielle intermédiaire (LI) d'une interruption logicielle (DIL) par laquelle ladite fonction (F(PM1)) est appelée.

5. Système de gestion de périphériques selon la revendication 3 ou 4, **caractérisé en ce que** le traitement de l'interruption logicielle (DIL) par la couche logicielle intermédiaire (LI) comprend la vérification de la disponibilité de la fonction appelée pour le processus appelant de la couche logicielle d'application.

6. Système de gestion de périphériques selon l'une quelconque des revendications 3 à 5, **caractérisé en ce que** la couche intermédiaire (LI) gère les périphériques en mode interruption.

7. Système de gestion de périphériques selon la revendication 6, **caractérisé en ce que** le traitement des interruptions matérielles (IT) des périphériques est effectué par la couche logicielle intermédiaire (LI), le traitement d'une interruption matérielle (IT) comprenant l'interruption logicielle (DIL) de la couche logicielle d'application (APPLI) pour permettre un traitement correspondant à ladite interruption matérielle dans cette couche, le périphérique étant libéré après la fin des traitements des dites interruptions matérielle et logicielle.

8. Carte à puce comprenant un circuit intégré muni d'un système de gestion de périphériques selon l'une quelconque des revendications précédentes.

## Claims

1. Peripheral management system in an integrated circuit with microprocessor (µP), comprising an application software layer (APPLI) comprising at least one process (P11) requiring the execution of hardware processes on at least one peripheral (P1) of the integrated circuit, **characterised in that** it comprises an intermediate software layer (Ll) for managing the hardware processes called by a process of the application software layer.

2. Peripheral management system according to Claim 1, **characterised in that** the application software layer (APPLI) calls a function (F(PM1)) of the intermediate software layer (Ll) corresponding to the hardware process (PM1) to be executed.

3. Peripheral management system according to Claim 2, **characterised in that** this function call (F(PM1)) is performed by the sending by the application software layer (APPLl) of a software interrupt (DlL).

4. Peripheral management system according to Claim 2, **characterised in that** this function call (F(PM1)) is performed by the calling by the application software layer (APPLI) of a macro-instruction of the intermediate software layer (Ll), said macro-instruction comprising the sending by the intermediate software layer (Ll) of a software interrupt (DIL) by which said function (F(PM1)) is called.

5. Peripheral management system according to Claim 3 or 4, **characterised in that** the processing of the software interrupt (DlL) by the intermediate software layer (Ll) comprises the checking of the availability of the function called for the calling process of the application software layer.

6. Peripheral management system according to any one of Claims 3 to 5, **characterised in that** the intermediate layer (Ll) manages the peripherals in interrupt mode.

7. Peripheral management system according to Claim 6, **characterised in that** the processing of the hardware interrupts (lT) of the peripherals is performed by the intermediate software layer (Ll), the processing of a hardware interrupt (IT) comprising the software interrupt (DIL) of the application software layer (APPLI) in order to allow processing corresponding to said hardware interrupt in this layer, the peripheral being released after the end of the processing of said hardware and software interrupts.

8. Smart card comprising an integrated circuit provided with a peripheral management system according to any one of the preceding claims.

## Patentansprüche

1. Verwaltungssystem fiir Peripheriegeräte in einem integrierten Mikroprozessor-Schaltkreis (µP), das eine logische Anwendungsschicht (APPLI) umfaßt, welche mindestens einen Prozeß (PL1) umfaßt, der die Ausführung von Hardware-Prozessen auf mindestens einem Peripheriegerät (P 1 ) des integrierten Schaltkreises erfordert, **dadurch gekennzeichnet, daß** es eine logische Zwischenschicht (LI) umfaßt, um die Hardware-Prozesse zu erzeugen, die von einem Prozeß der logischen Anwendungsschicht aufgerufen wurden.

2. Verwaltungssystem für Peripheriegeräte nach Anspruch 1, **dadurch gekennzeichnet, daß** die logische Anwendungsschicht (APPLI) eine Funktion (F(PM1)) der logischen Zwischenschicht (LI) aufruft, die einem auszuführenden Hardware-Prozeß (PMI) entspricht.

3. Verwaltungssystem für Peripheriegeräte nach Anspruch 2, **dadurch gekennzeichnet, daß** der Aufruf der Funktion (F(PM 1 )) von der logischen Anwendungsschicht (APPLI) mittels Senden einer logischen Unterbrechung (DIL) durchgeführt wird.

4. Verwaltungssystem fiir Peripheriegeräte nach Anspruch 2, **dadurch gekennzeichnet, daß** der Aufruf der Funktion (F(PM1)) durch den Aufruf eines Makrobefehls der logischen Zwischenschicht (LI) von der logischen Anwendungsschicht (APPLI) durchgeführt wird, wobei der Makrobefehl das Aussenden einer logischen Unterbrechung (DIL) durch die logische Zwischenschicht (LI) umfaßt, wodurch die Funktion (F(PM1)) aufgerufen wird.

5. Verwaltungssystem für Peripheriegeräte nach den Ansprüchen 3 oder 4, **dadurch gekennzeichnet, daß** die Bearbeitung der logischen Unterbrechung (DIL) durch die logische Zwischenschicht die Verifikation der Verfügbarkeit der aufgerufenen Funktion fiir den aufrufenden Prozeß der logischen Anwendungsschicht umfaßt.

6. Verwaltungssystem für Peripheriegeräte nach einem der Ansprüche 3 bis 5, **dadurch gekennzeichnet, daß** die Zwischenschicht (LI) die Peripheriegeräte in einen Unterbrechungsmodus versetzt.

7. Verwaltungssystem fiir Peripheriegeräte nach Anspruch 6, **dadurch gekennzeichnet, daß** die Bearbeitung von Hardware-Unterbrechungen (IT) der Peripheriegeräte von der logischen Zwischenschicht (LI) durchgeführt wird und die Bearbeitung einer Hardware-Unterbrechung (IT) die logische Unterbrechung (DIL) der logischen Anwendungsschicht (APPLI) umfaßt, um eine Bearbeitung zu ermöglichen, die der Hardware-Unterbrechung in dieser Schicht entspricht, wobei die Peripheriegeräte nach dem Ende der Bearbeitung der Hardware-Unterbrechungen und logischen Unterbrechungen freigegeben werden.

8. Chipkarte mit einem integrierten Schaltkreis, der ein Verwaltungssystem nach einem der vorangegangenen Ansprüche fiir Peripheriegeräte vorsieht.
